# EUROPEAN PATENT APPLICATION

(11) **EP 4 560 178 A1**
(43) Date of publication of application: **28.05.2025**
(21) Application number: 24172170.3
(22) Date of filing: 24.04.2024
(51) Int. Cl.: F16M 11/40, F16M 13/02, G03B 17/56

(54) **CAMERA BRACKET**

(30) Priority: 21.11.2023 CN 202323138269 U
(71) Applicant: Netvue Technologies Co., Ltd., Shenzhen Guangdong 518057 (CN)
(72) Inventor: Zhang, Rui, Shenzhen, 518057 (CN)
(74) Representative: Ipey

(57) **Abstract**

The present application provides a camera bracket, comprising a bottom plate, an orientable hose and a fixed part. The bottom plate is set with two hanging holes and two first through-hole slots, the two hanging holes are located at both sides of the center of the bottom plate, the two first through-hole slots are symmetrically set along the radial directions of the bottom plate, one end of the orientable hose is removably fixed in the bottom plate center, the fixed part is removably connected to the other end of the hose for removable connection of the camera components. Setting two hanging holes and two first through-hole slots on the bottom plate mounts the bottom plate onto the wall, and the two first through-hole slots allow for straps to pass through and bind to columns. The hose is memory adjustable and enables the multi-directional position change of the camera.

## Description

### TECHNICAL FIELD

The present application relates to the technical field of electronic devices. More specifically, the present application relates to a camera bracket.

### BACKGROUND

The present camera bracket generally fixes the camera at fixed position by fixed screw position, but cannot adjust the camera's position, and fixing method is limited, so that the use of single bracket is limited, resulting in low user experience.

### SUMMARY

The application provides a camera bracket to meet the purpose of increasing installation and fixing methods, randomly adjusting the camera's position, further improving the user experience.

The present application provides a camera bracket, which comprises a bottom plate, an orientable hose and a fixed part, where the bottom plate is set with two hanging holes and two first through-hole slots, the two hanging holes are located at both sides of the center at the diameter of the bottom plate, the two first through-hole slots are symmetrically set along one of the radial directions of the bottom plate, the hanging holes are used for allowing hanging nails on the wall to pass through, and allowing the bottom plate to hang on the wall by hanging nails on the wall, the two first through-hole slots are used for allowing the strap to pass through, and allowing the bottom plate to fix on the column by the strap, one end of the orientable hose is fixed in removable form in the center of the bottom plate, the fixed part is connected in removable form to one end of the hose away from the bottom plate for removable connection of the camera components.

The center of the bottom plate is threaded to one end of the orientable hose.

One of the bottom plate and the orientable hose is set with threaded stud, the threaded stud is covered with a spring washer, the spring washer is elastically held against the bottom plate and the orientable hose.

One end of the orientable hose is set with a first extension end, the threaded stud is set on the first extension end.

The bottom plate is set with two second through-hole slots, the two second through-hole slots are symmetrically set along another radial direction of the bottom plate, and the two first through-hole slots are located on both sides of one of the hanging holes, the two second through-hole slots are located on both sides of another the hanging hole.

The end of the orientable hose away from the bottom plate is set with threaded stud, the fixed part is set with threaded hole for connecting the threaded stud.

The fixed part is a flange plate, the threaded hole is located in the center of the fixed part.

One end of the orientable hose away from the bottom plate is set with second extension end, the threaded stud is set at the end of the second extension end, the fixed part and the second extension end jointly hold a part of the camera component.

The orientable hose is set with external and internal tubes, the external tube is tightly enclosed on circumferential side of the internal tube, the internal tube is a flexible metal tube, the external tube is a rubber tube.

The orientable hose is also set with steel core embedded internally in the internal tube.

The camera bracket herein sets two hanging holes and two first through-hole slots on the bottom plate to fix the bottom plate to the wall in the hanging method, and the two first through-hole slots can be used for allowing the strap to pass through, in order to realize the fixing method of binding on the column; meanwhile, the memory adjustment of the hose can be used to realize multi-directional position adjustment of the camera, thereby meeting use demands of multiple scenarios and improving the user experience.

### BRIEF DESCRIPTION OF THE DRAWINGS

To more clearly describe the technical scheme in embodiments of the present application, below in conjunction with accompanying drawings the present application is further specified, upon which those skilled in the art can obtain other drawings without creative efforts.
Fig. 1 is the stereoscopic diagram of the camera bracket in the embodiments of the present application.
Fig. 2 is the decomposition diagram of the camera bracket in Fig. 1.

### EMBODIMENTS

Unless otherwise specified, all technical and scientific terms used herein have same meanings that are generally understood by those skilled in the art; the terms used in the Description of embodiments of the present application herein are only used for describing the purpose of specific embodiments, instead of limiting thereof; the terms "include" and "have" and their other variants in the Description of embodiments of the present application, Claims, Description of The Drawings herein above intend to be non-limiting. The terms such as "first", "second" in the Description of embodiments of the present application, Claims, Description of The Drawings herein above are used for distinguishing different objects, instead of describing specific sequence.

The "embodiments" mentioned herein mean that specific characterizes, structures or properties described in combination with embodiments can be included in at least one embodiment of the present application. The expression appeared in different positions of the Description does not mean the same embodiment, or independent and alternative embodiments exclusive with other embodiments. The technicians of this field explicitly or implicitly understand that all described embodiments herein can be combined with other embodiments.

To help those skilled in the art better understand the embodiments of the present invention, specific embodiments are presented as follows in conjunction with the accompanying drawings.

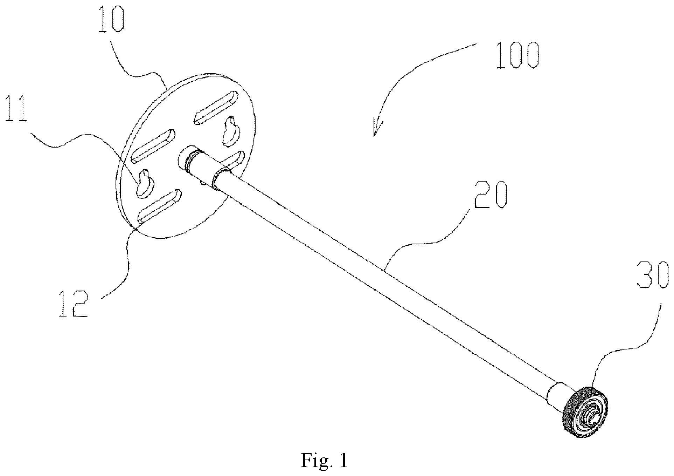

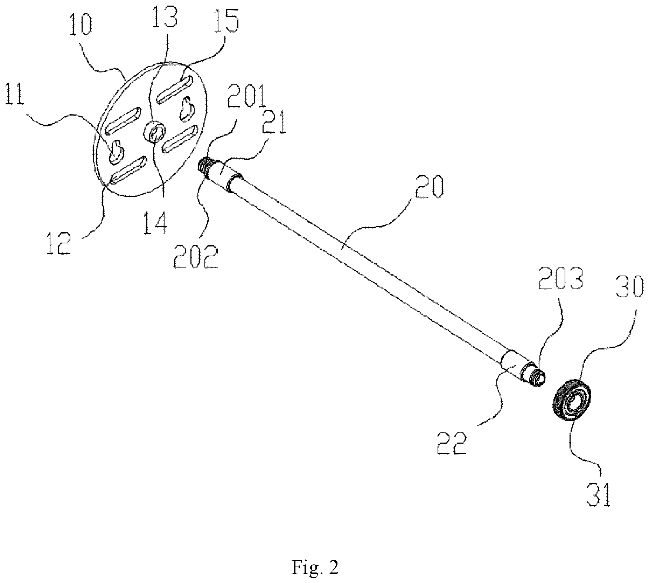

Refer to Fig. 1 & 2. The present application provides a camera bracket 100, which comprises a bottom plate 10, an orientable hose 20 and a fixed part 30, where the bottom plate 10 is set with two hanging holes11 and two first through-hole slots 12, the two hanging holes 11 are located at both sides of the center at the diameter of the bottom plate 10, the two first through-hole slots 12 are symmetrically set along one of the radial directions of the bottom plate 10, the hanging holes 11 are used for allowing hanging nails on the wall to pass through, and allowing the bottom plate 10 to hang on the wall by hanging nails on the wall. The two first through-hole slots 12 are used for allowing the strap to pass through, and allowing the bottom plate 10 to fix on the column by the strap, one end of the orientable hose 20 is fixed in removable form in the center of the bottom plate 10, the fixed part 30 is connected in removable form to one end of the orientable hose 20 away from the bottom plate 10 for removable connection of the camera components.

It can be understood that, the camera bracket 100 can be used for fixing the camera at specific position for monitoring or taking photos, sampling images and other purposes by the camera. Setting two hanging holes 11 and two first through-hole slots 12 on the bottom plate 10 can fix the bottom plate 10 to the wall in the hanging method, and the two first through-hole slots 12 can be used for allowing the strap to pass through, in order to realize the fixing method of binding on the column; meanwhile, the memory adjustment of the orientable hose can be used to realize multi-directional position adjustment of the camera, thereby meeting use demands of multiple scenarios and improving the user experience.

In this embodiment, the bottom plate 10 is a circular plate. The hanging hole 11 penetrates through the bottom plate 10. Each hanging hole 11 comprises a large circular hole and a track-type elliptical hole connected to the large hole, where the large hole is used for allowing nail caps of nails on the wall to pass through, the elliptical hole is used for allowing nail rods of nails on the wall to pass through, and limiting nail caps to pass through. The elliptical holes of two hanging holes 11 are parallel in the length direction and parallel to the radial direction of the bottom plate 10; after two hanging holes 11 of the bottom plate 10 respectively pass through two nails on the wall, by the weight of the bottom plate 10, the orientable hose 20 and the fixing part 30, the whole camera bracket 100 can be stably fixed on the wall. The elliptical holes of the two hanging holes 11 are designed according to international standard size of nails on the wall to match most of nails, thereby increasing multiple installation and use scenarios of the camera bracket 100. The two hanging holes 11 are symmetrically arranged relative to a diameter image of the bottom plate 10, the elliptical holes of the hanging holes 11 are parallel to the diameter in the length direction to ensure that the center of gravity of the bottom plate 10 is in its center, thereby increasing stability and balance of the whole camera bracket 100. In other embodiments, definitely, the hanging holes 11 can be gourd-shaped holes, or tower-type holes, or triangular holes or other types of holes that can meet multiple nail hanging methods for the hanging holes 11.

In this embodiment, the first through-hole slot 12 is a bar-type slot. The first through-hole slot 12 has similar shape with the track type. The first through-hole slot 12 penetrates through the bottom plate 10. The length direction of the first through-hole slot 12 is perpendicular to the length direction of elliptical holes of the hanging holes 11. The first through-hole slot 12 has sufficient length to match multiple specifications of straps and to allow them to pass through. The opposite direction of the two first through-hole slots 12 is perpendicular to the opposite direction of the two hanging holes 11, and they are respectively located on both sides of one of the hanging holes 11. The two first through-hole slots 12 are respectively located on both sides of one of the hanging holes 11, so that the positions of the two first through-hole slots 12 can be determined, and the unoccupied positions of the bottom plate 10 on both sides of the hanging hole 11 can be completely used. In other embodiments, definitely, the length direction of the first through-hole slots 12 can also be designed to be parallel with the length direction of elliptical holes, the two first through-hole slots 12 are located at external sides of the two hanging holes 11. The part between two first through-hole slots 12 is arranged in staggered form with the orientable hose 20 connected in removable form to the bottom plate 10, in order to pass through the strap of the two first through-hole slots 12 and stagger with the orientable hose 20.

Specifically, after the bottom plate 10 is connected to the orientable hose 20, the side of the bottom plate 10 away from the orientable hose 20 is held against the column, the length direction of the two first through-hole slots 12 is adjusted to be roughly parallel with the length direction of the column. The external strap passes through the two first through-hole slots 12, and the part between these two through-hole slots is clamped with the column to realizing stable fixing of the bottom plate 10 to the column. The first through-hole slots 12 are strip-shaped slots, so that the strap with certain width can be used to pass through the first through-hole slots 12, in order to increase the stability of clamping the bottom plate 10 on the column, prevent shaking of the bottom plate 10 on the column.

In this embodiment, the orientable hose 20 can randomly change its posture as required and fix at the changed posture, in order to position the adjusted camera. The internal deformation stress of the orientable hose 20 shall be greater than load of the camera, so that the orientable hose 20 will not deform due to the camera load when the camera is fixed to the end of the orientable hose 20 by the fixed part 30, and external deformation force on the orientable hose 20 is canceled, thereby avoiding unsteady shooting of the camera. The connection between the orientable hose 20 and the bottom plate 10 is removable, and the orientable hose 20 is connected to the center of the bottom plate 10, so that the bottom plate 10 can provide larger supporting force for the orientable hose 20 to increase load capacity of the orientable hose 20. When the camera bracket 100 is not used, the orientable hose 20 can be removed from the bottom plate 10, further the orientable hose 20 can be connected to other base or supporting rod, or the bottom plate 10 anytime, in order to randomly change the camera position. The connection between the orientable hose 20 and the bottom plate 10 is removable, without using any tool for fast and convenient disassembly or assembly. The removal without any tool refers to manual unscrewing or tightening, or manual clamping or detaching.

Further, the center of the bottom plate 10 is connected to thread of one end of the orientable hose.

In this embodiment, the center of the bottom plate 10 is set with a protruding circular column 13 which is set with threaded hole 14 penetrating through the bottom plate 10. The end of the orientable hose 20 is set with the threaded stud 201 which is connected to the threaded hole 14 to realize fast fixing, installation or removal of the orientable hose 20 with the bottom plate 10. After connection of the orientable hose 20 to the bottom plate 10, the end of the threaded stud 201 is not protruded from the bottom plate 10, in order to keep the surface of the bottom plate 10 against the orientable hose 20 smooth, thereby supporting the bottom plate 10 to be fixed on the wall or the column. In other embodiments, definitely, the head of the orientable hose 20 can also be set with buckle with elastic deformation, the center of the bottom plate 10 is set with slot hole in which the buckle is inserted to realize fast removable connection between the orientable hose 20 and the bottom plate 10.

In another embodiment, the center of the bottom plate 10 can also be set with the threaded stud 201 which is connected to the threaded hole 14 set on the end of orientable hose 20. This can also realize threaded connection between the bottom plate 10 and the orientable hose 20, and further realize fast removable connection between the bottom plate 10 and the orientable hose 20.

Further, the threaded stud 201 is covered with a spring washer 202, the spring washer 202 is elastically held against the bottom plate 10 and the orientable hose 20.

In this embodiment, the outer diameter of the spring washer 202 is roughly the same as that for the end of the set threaded stud 201 of the orientable hose 20. When the threaded stud 201 is screwed into the threaded hole 14, the spring washer 202 presents a natural condition or pre-compressed condition. At this time, the spring washer 202 does not apply the elastic force or smaller elastic force to the end of the orientable hose 20 and the end of the circular column 13. When the threaded stud 201 is screwed into the threaded hole 14, the spring washer 202 is deformed under extrusion, and apply larger elastic force to the end face of the orientable hose 20 and the end face of the circular column 13, so that the threaded stud 201 holds the acting force of relieving from the threaded hole 14 along the axial direction, in order to realize self-locking for the threaded stud 201 and the threaded hole 14 and to prevent loosening of them. In other embodiments, definitely, if the circular column 13 of the bottom plate 10 is set with the threaded stud 201, then the spring washer 202 will be covered at the periphery of the threaded stud 201, and can be held against the end surface of the circular column 13 and the end surface of the orientable hose 20.

Further, one end of the orientable hose 20 is set with a first extension end 21, the threaded stud 201 is set on the first extension end 21.

In this embodiment, the first extension end 21 has a larger outer diameter compared to that of the orientable hose 20 to increase bearing capacity of the threaded stud 201. The first extension end 21 forms a sheath for the end of the orientable hose 20 and cannot be deformed to increase its supporting force. The threaded stud 201 is protruded from the end surface of the first extension end 21, when the threaded stud 201 is screwed in the threaded hole 14, the spring washer 202 can be held against the end surface of the first extension end 21.

Further, the bottom plate 10 is set with two second through-hole slots 15, the two second through-hole slots 15 are symmetrically set along another radial direction of the bottom plate 10, and the two first through-hole slots 12 are located on both sides of one of the hanging holes 11, the two second through-hole slots 15 are located on both sides of another the hanging hole 11.

In this embodiment, the two second through-hole slots 15 and two first through-hole slots 12 are arranged in rectangular form. The second through-hole slot 15 and the first through-hole slot 12 on the same side are located on the same straight line, and the second through-hole slot 15 has same length with the first through-hole slot 12, so that the second through-hole slot 15 is suitable for same strap of the first through-hole slot 12. Through setting the opposite direction of two second through-hole slots 15 to be parallel to the opposite direction of the two first through-hole slots 12, the two straps can pass through both the two second through-hole slots 15 and the two first through-hole slots 12, and then are fixed on the same column to increase stability of the bottom plate 10 and the column. The two first through-hole slots 12 and the two second through-hole slots 15 are symmetrically arranged relative the center of the bottom plate 10 to increase stability of the bottom plate 10 and the column.

Further, the end of the orientable hose 20 away from the bottom plate 10 is set with threaded stud 203, the fixed part 30 is set with threaded hole 31 for connecting the threaded stud 203.

In this embodiment, the specification of the threaded stud 203 is standard thread, in order to match the threaded stud 203 with threaded hole 14 on the camera. After the fixed part 30 is connected to the threaded stud 203 in threaded form, the fixed part 30 and orientable hose 20 jointly clamp a part of the camera component to stabilize the camera component. In other embodiments, definitely, the end of orientable hose 20 away from the bottom plate 10 can be set with clamping buckles, the fixed part 30 is set with slot holes, the clamping buckles are connected with slot holes to realize the use of the orientable hose 20 and the fixed part 30, in order to achieve the stable installation of the camera and the fixed part 30.

Further, the fixed part 30 is a flange plate, the threaded hole 31 is located in the center of the fixed part 30.

In this embodiment, the extension direction of the threaded hole 31 is perpendicular to the surface of the fixed part 30 and parallel to the thickness direction of the fixed part 30. The large outer-diameter surface of the fixed part 30 is used to effectively support the camera, to further enhance supporting stability of the camera and the orientable hose 20.

Further, one end of the orientable hose 20 away from the bottom plate 10 is set with a second extension end 22, the threaded stud 203 is set at the end of the second extension end 22, the fixed part 30 and the second extension end 22 jointly clamp a part of the camera component.

In this embodiment, the second extension end 22 has the same structure as the first extension end 21, the second extension end 22 can effectively support the fixed part 30 to increase the stability of the fixed part 30 and the orientable hose 20. The second extension end 22 cannot be deformed to strengthen the support of the orientable hose 20 to the fixed part 30. As a possible embodiment, the camera components include camera and bottom base, with the camera fixed to the bottom base. The bottom base is set with a fixed plate on which fixed holes are set. The threaded stud 203 is protruded on the end surface of the orientable hose 20, the threaded stud 203 penetrates through the fixed hole, the fixed part 30 and the second extension end 22 jointly hold the fixed plate to fix the bottom base and further fix the camera.

Further, the orientable hose 20 is set with external and internal tubes, the external tube is tightly enclosed on circumferential side of the internal tube, the internal tube is a flexible metal tube, the external tube is a rubber tube.

In this embodiment, the external tube plays a role of protection for the internal tube which takes advantage of ductility of the flexible metal tube to enable the orientable hose 20 to have strong orienting and supporting properties. The external tube is tightly enclosed with the internal tube to prevent friction between them and increase the service life of the orientable hose. The internal tube can be made of aluminum material. The external tube can be made of PVC material.

Further, the orientable hose 20 is also set with steel core embedded internally in the internal tube. The effective support from the steel core on the internal tube can enhance the orienting performance of the orientable hose 20, so that the orientable hose 20 will not spring back after bending, in order to support the camera by the orientable hose 20 in multiple directions.

To sum up, while the application has been described in further details with reference to specific preferred embodiments thereof, the specific preferred embodiments are not intended to limit this application. Any alterations and modifications can be made by those common in the field, without departing from the spirit and scope thereof. Therefore, the scope of protection of this application is subject to the scope defined in claims.

## Claims

1. A camera bracket, **characterized in that**: the camera bracket comprises a bottom plate, an orientable hose and a fixed part, where the bottom plate is set with two hanging holes and two first through-hole slots, the two hanging holes are located at both sides of the center at the diameter of the bottom plate, the two first through-hole slots are symmetrically set along one of the radial directions of the bottom plate, the hanging holes are used for allowing hanging nails on the wall to pass through, and allowing the bottom plate to hang on the wall by the hanging nails on the wall, the two first through-hole slots are used for allowing the strap to pass through, and allowing the bottom plate to fix on the column by the strap, one end of the orientable hose is fixed in removable form in the center of the bottom plate, the fixed part is connected in removable form to one end of the orientable hose away from the bottom plate for removable connection of the camera components.

2. The camera bracket of Claim 1, **characterized in that**: the center of the bottom plate is connected to thread of one end of the orientable hose.

3. The camera bracket of Claim 2, **characterized in that**: one of the bottom plate and the orientable hose is set with threaded stud, the threaded stud is covered with a spring washer, the spring washer is elastically held against the bottom plate and the orientable hose.

4. The camera bracket of Claim 3, **characterized in that**: one end of the orientable hose is set with a first extension end, the threaded stud is set on the first extension end.

5. The camera bracket of Claim 1, **characterized in that**: the bottom plate is set with two second through-hole slots, the two second through-hole slots are symmetrically set along another radial direction of the bottom plate, and the two first through-hole slots are located on both sides of one of the hanging holes, the two second through-hole slots are located on both sides of another the hanging hole.

6. The camera bracket of Claim 1, **characterized in that**: the end of the orientable hose away from the bottom plate is set with threaded stud, the fixed part is set with threaded hole for connecting the threaded stud.

7. The camera bracket of Claim 6, **characterized in that**: the fixed part is a flange plate, the threaded hole is located in the center of the fixed part.

8. The camera bracket of Claim 6, **characterized in that**: one end of the orientable hose away from the bottom plate is set with second extension end, the threaded stud is set at the end of the second extension end, the fixed part and the second extension end jointly hold a part of the camera component.

9. The camera bracket of Claim 1, **characterized in that**: the orientable hose is set with external and internal tubes, the external tube is tightly enclosed on circumferential side of the internal tube, the internal tube is a flexible metal tube, the external tube is a rubber tube.

10. The camera bracket of Claim 9, **characterized in that**: the orientable hose is also set with steel core embedded internally in the internal tube.
